# EUROPEAN PATENT SPECIFICATION

(11) **EP 4 311 877 B1**
(45) Date of publication and mention of the grant of the patent: **14.05.2025**
(21) Application number: 22187041.3
(22) Date of filing: 26.07.2022
(51) Int. Cl.: D21H 17/22, B41M 5/52, D21H 17/28, D21H 17/00, D21H 19/10, D21H 19/12

(54) **MICROPLASTIC-FREE COATED PAPER**
MIKROPLASTIKFREIES BESCHICHTETES PAPIER
PAPIER COUCHÉ SANS MICROPLASTIQUE

(43) Date of publication of application: 31.01.2024
(73) Proprietor: SAPPI Netherlands Services B.V., 6211 AA Maastricht (NL)
(72) Inventor: Hendrix, Sandra, 6213 KB Maastricht (NL)
(74) Representative: Schmitz, Joseph

(56) References cited:
- WO-A1-2011/019866
- WO-A1-2021/010948
- US-B1- 6 197 155

## Description

### TECHNICAL FIELD

The present invention relates to printing paper coated with an ink receiving topcoat, as well as a method of manufacturing the printing paper coated with an ink receiving topcoat and a method of manufacturing an aqueous ink receiving topcoat composition.

### PRIOR ART

In recent years, voluntary efforts have been made to reduce or eliminate the use of microplastics in a variety of products. In view of the now generally accepted need to reduce microplastics, lawmakers are considering introducing or amending regulation that prohibits or limits the use of microplastics.

In paper coatings, it is well-known to use latexes of synthetic polymers such as styrenebutadiene latexes, as binders for pigment particles in graphical paper topcoats. Such latexes are stable dispersion of polymer microparticles in an aqueous liquid.

Therefore, it is desirable to reduce the use of such latexes in paper products to make them more environmentally friendly. One solution is to provide a coating in which the latex is replaced by aqueous starch dispersions or solutions, or cold-water soluble starch (dry addition directly into the coating). However, the use of starch is not without its own problems.

While digital printing is expanding its market share, the well-established method of offset printing still dominates the print market, and most papers used in offset and digital printing incorporate topcoats that comprise a latex.

In offset printing, a mixture of water and other chemicals is distributed by the dampening system on the printing press used in offset lithography. This mixture is known as "fountain solution" (http://printwiki.org/Fountain_Solution).

Offset printing operates on the principle that oil and water do not mix to any great extent; offset presses first treat metal printing plates with a fountain solution, which works to desensitize the non-image areas, rendering them ink-repellent, while leaving the image areas free to receive the oil-based ink. The fountain solution is applied to the plate through a series of rollers in a variety of configurations and is mostly constituted of water and isopropyl alcohol or in some cases, of water and a non-alcoholic alternative to isopropyl alcohol.

The problem with topcoats that incorporate starch dispersions instead of latexes is that they are very sensitive to the fountain solution, which significantly increases picking, splitting, and tearing of the paper during offset printing. Additionally, the sensitivity to fountain solution influences the quality of the printability of the paper due to wet repellence of the ink and/or surface roughing of the paper surface. It is therefore desirable to provide a topcoat that, when applied to a base paper (or a pre-coated paper), avoids the occurrence of such printing defects and results in perfect print quality.

Currently, most printing papers are custom-made to be used in one of the two predominant printing methods, offset and digital, and a paper made for use in one of these methods generally performs poorly when used in the other. This leads to printers having to keep a stock of both types of paper, which is economically disadvantageous. It is therefore desirable to provide a printing paper that can be used in both printing methods.

There exists therefore a need to reduce the use of latexes in paper products while at the same time providing an alternative paper product that can be used in an offset printing method, in particular in a wet offset printing method, without the occurrence of printing defects such as picking, splitting, and tearing of the paper while keeping the high print quality that can be achieved by use of latexes. Ideally, such a paper should be versatile and be usable both in digital and offset printing.

### SUMMARY OF THE INVENTION

The present invention provides a printing paper coated with an ink receiving topcoat, as well as a method of manufacturing the printing paper coated with an ink receiving topcoat and a method of manufacturing an aqueous ink receiving topcoat composition that resolve the above problems. In particular, the ink receiving coatings that find use in the various embodiments of the present inventions are free, i.e. essentially free of microplastic because the latex binders in the binder composition of the ink receiving topcoat have been replaced with alternative binders that nonetheless afford excellent printing quality when used in printing process that employ so-called fountain solutions as well as in digital printing processes.

It is therefore a first object of the present invention to provide a printing paper comprising at least one ink receiving topcoat, wherein the ink receiving topcoat comprises a pigment composition and a binder composition, the binder composition comprising a mixture of at least one starch, optionally at least one protein and at least one water-soluble polymer that is water-soluble in water at 20°C in an amount of more than 10 mg/ml, characterized in that the binder composition comprises the at least one protein in an amount of at least 5 to 25 weight percent, the at least one water-soluble polymer in an amount of at least 2.5 to 25 weight percent, and the at least one starch in an amount of 60 to 90 weight percent, based on the weight of the binder composition.

It is further a second object of the present invention to provide a use of a printing paper according to the first object in an offset printing process, flexo printing process, gravure printing process or a digital printing process.

It is yet further a third object of the present invention to provide an aqueous ink receiving topcoat composition comprising a pigment composition and a binder composition, wherein the binder composition comprises a mixture of at least one starch, optionally at least one protein and at least one water-soluble polymer, and optionally a plasticizer such as glycerol or sorbitol, characterized in that the binder composition comprises the at least one protein in an amount of at least 5 to 25 weight percent, the at least one water-soluble polymer in an amount of at least 2.5 to 25 weight percent, and the at least one starch in an amount of 60 to 90 weight percent, based on the dry weight of the binder composition.

It is furthermore a fourth object of the present invention to provide a use of the an aqueous ink receiving topcoat composition according to the third object, for the manufacture of a printing paper having an ink receiving topcoat, preferably a printing paper according to the first object.

It is a last and fifth object of the present invention to provide a process of manufacturing a printing paper having an ink receiving topcoat, preferably a printing paper according to the first object, wherein the process includes the steps of:
a. forming an aqueous ink receiving topcoat composition from a binder composition and a pigment composition, the binder composition comprising a mixture of at least one starch, optionally at least one protein and at least one water-soluble polymer, characterized in that the binder composition comprises the at least one protein in an amount of at least 5 to 25 weight percent, when present, and comprises the at least one water-soluble polymer in an amount of at least 2.5 to 25 weight percent, and the at least one starch in an amount of 60 to 90 weight percent, based on the dry weight of the binder composition, preferably an aqueous ink receiving topcoat composition according to the third object, or providing an aqueous ink receiving topcoat composition according to the third object of the present invention,
b. applying the aqueous ink receiving topcoat composition, preferably in an amount of about 5 to 25 gsm, more preferably in an amount of 8 to 15 gsm, most preferably in an amount of 10 to 12 gsm, on a base paper or a pre-coated paper, in particular via a blade coater,
c. drying at least the aqueous ink receiving topcoat composition such as to form a printing paper having an ink receiving topcoat, preferably a printing paper according to the first object.

Further embodiments of the invention are laid down in the dependent claims.

### DESCRIPTION OF PREFERRED EMBODIMENTS

In the context of the present invention, the term "water-insoluble polymer" means that the polymer is not soluble in water at 20°C, and in particular has a solubility in water at 20°C of less than 1 mg/l (10⁻⁶ w/v%), and preferably in particular of less than 10 mg/l (10⁻⁵w/v%).

In the context of the present invention, the term "water-soluble polymer" means that the polymer is soluble in water at 20°C in an amount of more than 10 mg/l, and in particular has a solubility in water at 20°C of at least 40 g/l (4 w/v%).

In the context of the present invention, the term "essentially free of a material" means that the material is present in less than 0.1% w/w%, preferably less than 0.01 w/w%.

It is a first object of the present invention to provide a printing paper comprising at least one ink receiving topcoat, wherein the ink receiving topcoat comprises a pigment composition and a binder composition, the binder composition comprising a mixture of at least one starch, optionally at least one protein and at least one water-soluble polymer that is water-soluble in water at 20°C in an amount of more than 10 mg/ml, characterized in that the binder composition comprises the at least one protein in an amount of at least 5 to 25 weight percent, , and comprises the at least one water-soluble polymer in an amount of at least 2.5 to 25 weight percent, and the at least one starch in an amount of 60 to 90 weight percent, based on the weight of the binder composition.

In one embodiment of the printing paper according to the present invention, one side of the printing paper, or both sides of the printing paper, are coated with the ink receiving topcoat.

In one embodiment of the printing paper according to the present invention, in the ink receiving topcoat, the binder composition may comprise a mixture of at least one starch, at least one protein and at least one water-soluble polymer, while in another embodiment the binder composition may comprise a mixture of at least one starch and at least one water-soluble polymer, without the at least one protein.

When the binder composition comprises a mixture of at least one starch, at least one protein and at least one water-soluble polymer, the binder composition comprises the at least one protein in an amount of 5 to 25 weight percent, preferably of 10 to 25 weight percent, based on the weight of the binder composition.

When the binder composition comprises a mixture of at least one starch and at least one water-soluble polymer, without the at least one protein, the binder composition comprises the at least one water-soluble polymer in an amount of 2.5 to 25 weight percent, preferably in an amount of 15 to 25 weight percent, based on the weight of the binder composition. Thus, the binder composition can comprise the at least one water-soluble polymer in an amount of from about 2.5 to 20 weight percent, or 15 to 20 weight percent, based on the weight of the binder composition.

In one embodiment of the printing paper according to the present invention, the binder composition, or both binder composition and pigment composition, and preferably the ink receiving topcoat, as a whole, comprises essentially no water-insoluble synthetic polymer and/or microplastics, or is free of water-insoluble synthetic polymer and/or microplastics. Water-insoluble polymer and/or microplastics may be, for example, particles of styrenebutadiene copolymer, (meth)acrylic acid copolymers polyethylene, polycarbonate, polypropylene or polystyrene.

In one embodiment of the printing paper according to the present invention, the at least one protein is whey protein, casein, soy protein, wheat protein such as gluten and preferably is whey protein. Whey protein may be sourced from products such as whey protein isolate or whey protein concentrate. It was found that whey protein has no influence on viscosity of the coating, so the target of high solids content can be met. Further the end paper will have a hydrophobic surface which "protects" the starch in the ink receiving layer from deleterious effects that the fountain solution would otherwise have on the starch during printing.

In one embodiment of the printing paper according to the present invention, the binder composition further comprises a plasticizer such as glycerol or sorbitol. The plasticizer has the purpose of plasticizing the starch within the binder composition.

In one embodiment of the printing paper according to the present invention, the binder composition comprises the at least one protein in an amount of at least 10 weight percent, and preferably in an amount of from 10 to 40 weight percent, more preferably in an amount of from 15 to 25, weight percent, based on the weight of the binder composition.

The binder composition of the printing paper according to the present invention comprises the at least one starch in an amount of 60 to 90 weight percent, based on the weight of the binder composition.

In one embodiment of the printing paper according to the present invention, the binder composition comprises the at least one water-soluble polymer in an amount of of 10 to 25 weight percent, more preferably in an amount of from 15 to 25 weight percent, based on the weight of the binder composition. In particular, in the case where the binder composition comprises only the at least one water-soluble polymer in combination with the at least one starch, without the at least one protein, the binder composition comprises the at least one water-soluble polymer in an amount of at least 10 weight percent, preferably in an amount of from 15 to 25, based on the weight of the binder composition.

In one embodiment of the printing paper according to the present invention, the binder composition and/or pigment composition may further include known additives, such as dispersion agents, foaming agents, optical brighteners, colorants, rheology agents and mixtures thereof. The amount of such additives may, in general, vary, and may be up from 0 up to 1, 2.5 or 5 weight percent, based on the weight of the binder composition or pigment composition.

In one embodiment of the printing paper according to the present invention, when the binder composition comprises a mixture of the at least one water-soluble polymer and the at least one starch, without comprising the at least one protein, it comprises the at least one water-soluble polymer and the at least one starch in a total amount of at least 75 weight percent, or of from 75 to 97.5 weight percent, preferably in an amount of at least 85 weight percent, or of from 85 to 97.5 weight percent, based on the weight of the binder composition. In one embodiment, the binder composition may comprise the at least one water-soluble polymer and the at least one starch in a total amount of at least 97.5 weight percent, more preferably of at least 99 weight percent or 100 weight percent.

In one embodiment of the printing paper according to the present invention, the binder composition comprises a mixture of the at least one protein, the at least one starch, and the at least one water-soluble polymer, it comprises the mixture of the at least one protein, the at least one starch and the at least one water-soluble polymer in a total amount of at least 75 weight percent, or of from 75 to 97.5 weight percent, preferably in an amount of at least 85 weight percent, or of from 85 to 90 weight percent, based on the weight of the binder composition. Alternatively, or in addition to, the aforementioned embodiment, the binder composition comprises the mixture of the at least one protein and the at least one starch in a total amount of from 75 to 87.5 weight percent, based on the weight of the binder composition. In particular, within said mixtures, the at least one water-soluble polymer is comprised in an amount of from 2.5 to 25 weight percent, preferably in an amount of from 2.5 to 5 weight percent, based on the weight of the binder composition and/or the at least one protein is comprised in an amount of at least 10 weight percent, preferably an amount of from 15 to 75 weight percent, more preferably in an amount of from 10 to 20, weight percent, based on the weight of the binder composition, preferably with the remainder weight percent of the at least 75 weight percent, or the of from 75 to 97.5 weight percent, of the at least 85 weight percent, or the of from 85 to 90 weight percent of the mixture of the at least one protein, the at least one starch and the at least one water-soluble polymer being the at least one starch.

In one embodiment of the printing paper according to the present invention, the binder composition comprises a mixture of the at least one protein, the at least one starch, and the at least one water-soluble polymer, it comprises the mixture of the at least one protein, the at least one starch and the at least one water-soluble polymer in a total amount of from 85 to 90 weight percent, based on the weight of the binder composition, and comprises the mixture of the at least one protein and the at least one starch in a total amount of from 75 to 87.5 weight percent, based on the weight of the binder composition, where the at least one water-soluble polymer is comprised in an amount of from 2.5 to 5 weight percent, based on the weight of the binder composition, and the at least one protein is comprised in an amount of 10 to 20 weight percent, based on the weight of the binder composition, preferably with the remainder weight percent of the at least 85 to 90 weight percent of the mixture of the at least one protein, the at least one starch and the at least one water-soluble polymer preferably being the at least one starch.

The remainder of the weight percent in the binder composition, after taking into account the amounts of the at least one protein, the at least one starch, and the at least one water-soluble polymer may be made up by a plasticizer and/or other additives. Plasticizers are used to unfold the protein and improve flexibility of the coating in order to improve folding behavior. In lower grammage papers, the use of the plasticizer is not essential although preferred. Besides plasticizers other additives, such as anti foaming agent, thickeners can be added to compositions.

In one embodiment of the printing paper according to the present invention, the at least one starch is preferably non-cationic starch, and more preferably is modified non-cationic starch such as dextrin, anionic starch, hydroxypropylated or oxidized starch. Because the coating is an anionic system, the calcium carbonates will flocculate when cationic starch is added. Therefore, in the case a cationic starch is used, care should be taken to avoid flocculation of negatively charged components in the binder and/or pigment composition, when making the aqueous ink receiving topcoat composition.

In one embodiment of the printing paper according to the present invention, the at least one water-soluble polymer is a water-soluble polyolefin. An example are synthetic polymers or copolymers, and in particular synthetic water-soluble polyolefins, such as polyvinylalcohol or ethylene vinyl alcohol. It is understood that the at least one water-soluble polymer may be a synthetic polymer or copolymer, or a mixture of both. In particular, the at least one water-soluble polymer may be a mixture of polyvinylalcohol and ethylene vinyl alcohol copolymer, preferably in a weight ratio of 4:6 to 6:4.

In general, the ethylene vinyl alcohol copolymers having a viscosity in the range of about 3 to about 10, preferably of about 3 to 5 mPa·s when measured at 4% aqueous solution at 20°C determined by Brookfield synchronized-motor rotary type.

In general, the polyvinylalcohol having a viscosity in the range of about 3 to 10 mPa·s, when measured at 4 % aqueous solution at 20°C determined by Brookfield synchronized-motor rotary type.

In general, the water-soluble polymer polyvinylalcohol having a degree of degree of hydrolysis [mol.-%] of 95 or more, in particular having a degree of hydrolysis [mol.-%] of 98 or more are preferred.

In the case the water-soluble polymer is a polyvinylalcohol, it preferably has a solubility of at least 20% at 20°C in water, preferably of more than 25% by weight at 20°C in water.

In one embodiment of the printing paper according to the present invention, the at least one water-soluble polymer is chosen among polysaccharides such as pectins or galactomannans.

In one embodiment of the printing paper according to the present invention, the weight ratio of the binder composition with respect to 100 parts by weight of the pigment composition is between 5 pph and 20 pph (parts per hundred) of pigment composition.

In one embodiment of the printing paper according to the present invention, the pigment composition comprises, or consists of, inorganic pigment particles such as calcium carbonate particles, titanium dioxide particles, clay mineral particles, or mixtures thereof. Calcium carbonate particles may be chosen from particles of ground calcium carbonate (GCC) or precipitated calcium carbonate (PCC). Clay mineral particles may be chosen, for example, from kaolin clay particles or talc. Other inorganic pigment particles may be barium sulfate, calcium sulfate, zinc oxide, silicic acid, silicate, colloidal silica and so on.

It is a second object of the present invention to provide a use of a printing paper according to the above first object in an offset printing process, flexo printing process, gravure printing process or a digital printing process. As discussed above, when used in said printing processes, the paper printing paper according to the first object exhibits good printability, e.g. absence of mottle, when printed in a printing process that includes the use of fountain solutions, and at the same time exhibits good printability when printed in a digital printing press.

It is a third object of the present invention to provide an aqueous ink receiving topcoat composition comprising a pigment composition and a binder composition, wherein the binder composition comprises a mixture of at least one starch, optionally at least one protein, and at least one water-soluble polymer, characterized in that the binder composition comprises the at least one protein in an amount of at least 5 to 25 weight percent, the at least one water-soluble polymer in an amount of at least 2.5 to 25 weight percent, and the at least one starch in an amount of 60 to 90 weight percent, based on the dry weight of the binder composition. The applicants have found that the aqueous ink receiving topcoat composition according to the third object of the present invention has good rheological properties, in particular in that the viscosity does not exceed an upper threshold when the coating machine is run at high speeds at high solids contents, in particular at solids contents above about 60, or between about 60 to about 70 weight percent, based on the weight of the aqueous ink receiving topcoat composition.

In an embodiment of the aqueous ink receiving topcoat composition according to the third object of the present invention, the viscosity of the aqueous ink receiving topcoat composition is of about 700 to 2000 mPas at 100 rpm, when measured on a Brookfield laboratory viscometer, using spindle #3, at 40°C.

In an embodiment of the aqueous ink receiving topcoat composition according to the third object of the present invention, the aqueous ink receiving topcoat composition may further comprise further additives such as plasticizers, defoaming agents, antibacterial agents, antialgal agents, thickening agents, dyes, antifouling agents and others.

Plasticizers useful in plasticizing the starch component of the aqueous ink receiving topcoat composition may be chosen from polyols such as for example ethylene glycol, glycerol or sorbitol. Other plasticizers useful are ethanolamine and similar compounds. The plasticizers may be used alone or as a mixture of two or more different plasticizers.

It is understood, in general, that in the aqueous ink receiving topcoat composition, the components, which are recited in the context of the ink receiving topcoat, are present in the same amounts in the aqueous ink receiving topcoat composition, when expressed in *dry* weight. Therefore, a repetition of all the embodiments of the ink receiving topcoat that are directly applicable to aqueous ink receiving topcoat composition are omitted for the sake of conciseness.

In an embodiment of the aqueous ink receiving topcoat composition according to the third object of the present invention, the solids content by weight of the ink receiving topcoat composition is of from 60 to about 70 weight percent, based on the weight of the aqueous ink receiving topcoat composition. In a preferred embodiment, the solids content by weight of the ink receiving topcoat composition corresponds to the dry weight of both the pigment composition and the binder composition, or stated alternatively, to the dry weight of the mixture of at least one starch, and one or both of at least one protein and at least one water-soluble polymer, and of the inorganic pigment particles.

It is a fourth object of the present invention to provide a use of an aqueous ink receiving topcoat composition according to the third object of the present invention, for the manufacture of a printing paper having an ink receiving topcoat, preferably a printing paper according to the first object of the present invention.

It is a fifth object of the present invention to provide a process of manufacturing a printing paper having an ink receiving topcoat, preferably a printing paper according to the first object, wherein the process includes the steps of:
a. forming an aqueous ink receiving topcoat composition from a binder composition and a pigment composition, the binder composition comprising a mixture of at least one starch, optionally at least one protein and at least one water-soluble polymer, characterized in that the binder composition comprises the at least one protein in an amount of at least 5 to 25 weight percent, the at least one water-soluble polymer in an amount of at least 2.5 to 25 weight percent, and the at least one starch in an amount of 60 to 90 weight percent, based on the dry weight of the binder composition, preferably an aqueous ink receiving topcoat composition according to the third object,
b. applying the aqueous ink receiving topcoat composition, preferably in an amount of about 5 to 25 gsm (grams per square meter), more preferably in an amount of 8 to 15 gsm, on a base paper or a pre-coated paper,
c. drying the aqueous ink receiving topcoat composition such as to form a printing paper having an ink receiving topcoat, preferably a printing paper according to the first object.

The aqueous ink receiving topcoat composition may be applied via known coating methods on known coating apparatuses, such as with for example blade coaters, rod coaters, gravure coaters, size-press coaters, preferably on a blade coater.

In an embodiment of the process according to the fifth object of the present invention, during the step of forming an aqueous ink receiving topcoat composition, the at least one protein is provided as a aqueous protein stock of the at least one protein, preferably having a protein dry weight content of about 40 to 50 weight percent. It has been found that when the at least one protein is provided as a liquid protein stock instead of a powder, the formation of foam in the aqueous ink receiving topcoat composition can be reduced or even avoided.

### EXAMPLES

Three of prepared aqueous ink receiving topcoat compositions according to the present invention are presented below.

First, an aqueous ink receiving topcoat composition comprising starch in combination with whey protein in its binder composition was compared to an ink receiving topcoat composition that comprised only starch and one that comprised only SB (StyreneButadiene) latex. Second, three aqueous ink receiving topcoat compositions comprising starch in combination with synthetic water-soluble polymer in its binder composition were compared to ink receiving topcoat compositions that comprised only starch and comprised only SB latex. Thirdly, three aqueous ink receiving topcoat composition comprised starch in combination with both whey protein and synthetic water-soluble polymer in its binder composition were compared to an ink receiving topcoat composition that comprised only starch and one that comprised only SB latex.

Each of said aqueous ink receiving topcoat compositions was compared to an aqueous ink receiving topcoat composition comprising a SB latex-based binder composition, as well as to an aqueous ink receiving topcoat composition comprising only starch in its binder composition, in terms of printability on an offset printer.

In the below tables, the numbers indicate parts are parts by weight. The ranking for printability reflects the quality of the print, where 1 designates "above target", 2 designates "below target" and 3 designates "very critical". 1 is the best in terms of printability, 3 the worst.

The print was run an on commercial 4 color offset press (Shiatsu), for about 500 to 1000 A3 sheets. Sheets were printed with standard 4 colors, KCMY =Black, Cyan, Magenta and Yellow.

### Aqueous ink receiving topcoat composition comprised starch in combination with whey protein in its binder composition

| | Comparative Latex | Comparative Starch | Starch/Whey |
|---|---|---|---|
| Calcium carbonate | 100 | 100 | 100 |
| Latex | 7.0 (89.7w/w%) | | |
| Starch (oxidized) | | 8 (88.9 w/w%) | 4.8 (53.3 w/w%) |
| Whey protein | | | 3.2 (35.6 w/w%) |
| PVOH | 0.8 (10.3 w/w%) | | |
| Plasticizer | | 1 (11.1 w/w%) | 1 (11.1 w/w%) |
| Thickener | 0.15 | | 0.2 |
| **Printability** | 1.75 | 2.75 | 1.50 |

### Aqueous ink receiving topcoat composition comprised starch in combination with water-soluble polymer in its binder composition

| | Comparativ e Latex | Comparative Starch 1 | Comparative Starch 2 | Inventive Starch/ EVOH | Inventive Starch/ EVOH | Inventive Starch/ EVOH/PVOH |
|---|---|---|---|---|---|---|
| Calcium carbonate | 100 | 100 | 100 | 100 | 100 | 100 |
| Latex | 7.0 (89.7 (w/w%) | | | | | |
| Starch (oxidized) | | 8 (100 w/w%) | | 6.5 (81.3 w/w%) | | |
| Starch (dextrin) | | | 8 (100w/w%) | | 6.5 (81.3w/w %) | 6.5 (86.7 w/w%) |
| EVOH | | | | 1.5 (18.7 w/w%) | 1.5 (18.8 w/w%) | 0.5 (6.7w/w%) |
| PVOH | 0.8 (10.3 w/w%) | | | | | 0.5 (6.7w/w%) |
| Thickener | 0.15 | | | | | |
| **Printability** | 1.75 | 2.75 | 2.25 | 1.50 | 1.50 | 1.50 |

### Aqueous ink receiving topcoat composition comprised starch in combination with both whey protein and water-soluble polymer in its binder composition

| | Comparativ e Latex | Comparative Starch 1 | Comparative Starch 2 | Inventive Starch/whe y/ PVOH | Inventive Starch/wh ey PVOH | Inventive Starch/whey /PVOH |
|---|---|---|---|---|---|---|
| Calcium carbonate | 100 | 100 | 100 | 100 | 100 | 100 |
| Latex | 7.0 (89.7w/w% ) | | | | | |
| Starch (oxidized) | | 8 (88.9 w/w%) | | 4 (47.4 w/w%) | | |
| Starch (dextrin) | | | 8 (88.9 w/w%) | | 4 (47.4 w/w%) | 4.6 (54.5 (w/w%) |
| Starch (hydroxypro pylated) | | | | 1.6 (18.9 w/w%) | 1.6 (18.9 w/w%) | 1.6 (18.9 w/w%) |
| Whey protein | | | | 1.6 (18.9 w/w%) | 1.6 (18.9 w/w%) | 1.0 (11.8 w/w%) |
| PVOH | 0.8 (10.3 w/w%) | | | 0.25 (3.0 w/w%) | 0.25 (3.0 w/w%) | 0.25 (3.0 w/w%) |
| Plasticizer | | 1 (11.1 w/w%) | 1 (11.1 w/w%) | 1 (11.8 w/w%) | 1 (11.8 w/w% | 1 (11.8 w/w%) |
| Thickener | 0.15 | | | | | |
| Printability | 1.5 | 2.75 | 2.25 | 1.50 | 1.25 | 1.50 |

As can be seen from the above Tables, the comparative starch-only-based ink receiving topcoat composition in general performed poorly in printability (2.25 was the best score, 3 the worst score), because the fountain solution of the offset printing press interacted with the ink receiving topcoat, and leading to a deleterious effect on the print quality.

As can be seen equally from the above, the comparative latex-based ink receiving topcoat composition in general performed well in printability (1.5 was the best score, 1.75 the worst score).

Finally, the inventive ink receiving topcoat compositions yielded in general equally good, and in some cases even better printability (1.25 was the best score, 1.5 the worst score) when compared to the comparative ink receiving topcoat composition based on latex. In particular, the ink receiving topcoat compositions including starch and both protein and water-soluble polymer had, on average, a better printability (<1.5) than the comparative latex-based ink receiving topcoat compositions (>1.5). The ink receiving topcoat compositions based on starch in combination with either protein (avg=1.5) or water-soluble polymer (avg=1.5) were in general equivalent to the comparative latex-based ink receiving topcoat compositions (avg>1.5).

## Claims

1. A printing paper comprising at least one ink receiving topcoat, wherein the ink receiving topcoat comprises
a pigment composition
and a binder composition,
the binder composition comprising a mixture of at least one starch and at least one water-soluble polymer that is soluble in water at 20°C in an amount of more than 10 mg/l, and optionally at least one protein
**characterized in that**
the binder composition comprises
the at least one starch in an amount of 60 to 90 weight percent,
the at least one water-soluble polymer in an amount of 2.5 to 25 weight percent,
the at least one protein in an amount of 5 to 25 weight percent, when present,
based on the weight of the binder composition.

2. The printing paper according to claim 1, wherein the binder composition, or the binder composition and the pigment composition, or the ink receiving topcoat, are free of water-insoluble synthetic polymer.

3. The printing paper according to the any one of the preceding claims, wherein the protein is whey protein, casein, soy protein, wheat protein such as gluten and preferably is whey protein.

4. The printing paper according to the any one of the preceding claims, wherein the binder composition comprises
the at least one protein and the at least one starch in a total amount of at least 75 weight percent, or of from 75 to 97.5 weight percent, preferably in an amount of at least 85 weight percent, or of from 85 to 90 weight percent, based on the weight of the binder composition,
and comprises the at least one water-soluble polymer in an amount of from 2.5 to 25 weight percent, preferably in an amount of from 2.5 to 5 weight percent, based on the weight of the binder composition.

5. The printing paper according to the any one of the preceding claims, wherein the at least one starch is non-cationic starch, and preferably is modified non-cationic starch such as dextrin, hydroxypropylated or oxidized starch.

6. The printing paper according to the any one of the preceding claims, wherein the at least one water-soluble polymer is chosen among polysaccharides such as pectins or galactomannans, or among synthetic polymers or copolymers such as polyvinylalcohol, ethylene vinyl alcohol, or mixtures of polyvinylalcohol and ethylene vinyl alcohol.

7. The printing paper according to the any one of the preceding claims, wherein the weight ratio of the binder composition with respect to 100 parts by weight of the pigment composition is between 5 pph and 20 pph of pigment composition.

8. The printing paper according to the any one of the preceding claims, wherein the at least one water-soluble polymer is a water-soluble polyolefin, preferably a polyvinylalcohol, ethylene vinyl alcohol, or mixtures of polyvinylalcohol and ethylene vinyl alcohol, and preferably wherein the polyvinylalcohol preferably has a degree of hydrolysis [mol.-%] of 98 or more and/or has a solubility of at least 20% at 20°C in water.

9. Use of a printing paper according to the any one of the preceding claims in an offset printing process, flexo printing process, gravure printing process or a digital printing process.

10. An aqueous ink receiving topcoat composition, comprising
a pigment composition
and a binder composition,
wherein the binder composition comprises
a mixture of at least one starch,
at least one water-soluble polymer,
optionally at least one protein,
and optionally a plasticizer such as glycerol or sorbitol, **characterized in that**
the binder composition comprises
the at least one starch in an amount of 60 to 90 weight percent,
the at least one water-soluble polymer in an amount of 2.5 to 25 weight percent,
the at least one protein in an amount of 5 to 25 weight percent, when present,
based on the dry weight of the binder composition.

11. The aqueous ink receiving topcoat composition according to claim 10, wherein the solids content by weight of said composition is of from 60 to about 70, based on the total weight of the aqueous ink receiving topcoat composition.

12. Use of an aqueous ink receiving topcoat composition according to claim 10 or 11, for the manufacture of a printing paper having an ink receiving topcoat, preferably a printing paper according to claim 1.

13. A process of manufacturing a printing paper having an ink receiving topcoat, preferably a printing paper according to claim 1, wherein the process includes the steps of:
a. forming an aqueous ink receiving topcoat composition from a binder composition and a pigment composition, the binder composition comprising a mixture of
at least one starch,
at least one water-soluble polymer,
optionally at least one protein,
**characterized in that** the binder composition comprises
the at least one starch in an amount of 60 to 90 weight percent,
the at least one water-soluble polymer in an amount of 2.5 to 25 weight percent when present,
the at least one protein in an amount of 5 to 25weight percent, if present,
based on the dry weight of the binder composition, or providing an aqueous ink receiving topcoat composition according to claim 10 or 11,
b. applying the aqueous ink receiving topcoat composition, preferably in an amount of about 5 to 25 gsm, more preferably in an amount of 8 to 15 gsm, on a base paper or a pre-coated paper, in particular via a blade coater,
c. drying the aqueous ink receiving topcoat composition such as to form a printing paper having an ink receiving topcoat, preferably a printing paper according to claim 1.

14. A process of manufacturing a printing paper having an ink receiving topcoat according to claim 13, wherein during the step of forming an aqueous ink receiving topcoat composition, the at least one protein is provided as an aqueous protein stock of the at least one protein, preferably having a protein content of about 40 to 50 weight percent of the aqueous protein stock.

## Patentansprüche

1. Druckpapier, aufweisend mindestens eine tintenaufnehmende Deckschicht, wobei die tintenaufnehmende Deckschicht
eine Pigmentzusammensetzung
und eine Bindemittelzusammensetzung aufweist,
wobei die Bindemittelzusammensetzung eine Mischung aus mindestens einer Stärke und mindestens einem wasserlöslichen Polymer, welches bei 20°C in einer Menge von mehr als 10 mg/l in Wasser löslich ist, und gegebenenfalls mindestens ein Protein aufweist,
**dadurch gekennzeichnet, dass**
die Bindemittelzusammensetzung
die mindestens eine Stärke in einer Menge von 60 bis 90 Gewichtsprozent,
das mindestens eine wasserlösliche Polymer in einer Menge von 2.5 bis 25 Gewichtsprozent und
das mindestens eine Protein in einer Menge von 5 bis 25 Gewichtsprozent, falls vorhanden,
bezogen auf das Gewicht der Bindemittelzusammensetzung, aufweist.

2. Druckpapier gemäss Anspruch 1, wobei die Bindemittelzusammensetzung oder die Bindemittelzusammensetzung und die Pigmentzusammensetzung, oder die tintenaufnehmende Deckschicht frei von wasserunlöslichem synthetischem Polymer sind.

3. Druckpapier gemäss einem der vorhergehenden Ansprüche, wobei das Protein Molkeprotein, Casein, Sojaprotein, oder Weizenprotein wie beispielsweise Gluten ist, und vorzugsweise Molkeprotein ist.

4. Druckpapier gemäss einem der vorhergehenden Ansprüche, wobei die Bindemittelzusammensetzung
das mindestens eine Protein und die mindestens eine Stärke in einer Gesamtmenge von mindestens 75 Gewichtsprozent, oder von 75 bis 97.5 Gewichtsprozent, vorzugsweise in einer Menge von mindestens 85 Gewichtsprozent, oder von 85 bis 90 Gewichtsprozent, bezogen auf das Gewicht der Bindemittelzusammensetzung, aufweist,
und das mindestens eine wasserlösliche Polymer in einer Menge von 2.5 bis 25 Gewichtsprozent, vorzugsweise in einer Menge von 2.5 bis 5 Gewichtsprozent, bezogen auf das Gewicht der Bindemittelzusammensetzung, aufweist.

5. Druckpapier gemäss einem der vorhergehenden Ansprüche, wobei die mindestens eine Stärke eine nicht-kationische Stärke ist und vorzugsweise eine modifizierte nicht-kationische Stärke wie Dextrin, hydroxypropylierte oder oxidierte Stärke ist.

6. Druckpapier gemäss einem der vorhergehenden Ansprüche, wobei das mindestens eine wasserlösliche Polymer ausgewählt ist aus Polysacchariden wie Pektinen oder Galaktomannanen, oder aus synthetischen Polymeren oder Copolymeren wie Polyvinylalkohol, Ethylenvinylalkohol oder Mischungen aus Polyvinylalkohol und Ethylenvinylalkohol.

7. Druckpapier gemäss einem der vorhergehenden Ansprüche, wobei das Gewichtsverhältnis der Bindemittelzusammensetzung in Bezug auf 100 Gewichtsteile der Pigmentzusammensetzung zwischen 5 pph und 20 pph der Pigmentzusammensetzung liegt.

8. Druckpapier gemäss einem der vorhergehenden Ansprüche, wobei das mindestens eine wasserlösliche Polymer ein wasserlösliches Polyolefin, vorzugsweise ein Polyvinylalkohol, Ethylenvinylalkohol oder Mischungen von Polyvinylalkohol und Ethylenvinylalkohol ist, und wobei der Polyvinylalkohol vorzugsweise einen Hydrolysegrad [Mol-%] von 98 oder mehr und/oder eine Löslichkeit von mindestens 20 % bei 20°C in Wasser aufweist.

9. Verwendung eines Druckpapiers gemäss einem der vorhergehenden Ansprüche in einem Offsetdruckverfahren, Flexodruckverfahren, Tiefdruckverfahren oder einem Digitaldruckverfahren.

10. Wässrige, tintenaufnehmende Deckschichtzusammensetzung, aufweisend eine Pigmentzusammensetzung
und eine Bindemittelzusammensetzung,
wobei die Bindemittelzusammensetzung
eine Mischung aus mindestens einer Stärke,
mindestens einem wasserlöslichen Polymer,
gegebenenfalls mindestens einem Protein,
und gegebenenfalls einem Weichmacher wie Glycerin oder Sorbit aufweist, **dadurch gekennzeichnet, dass** die Bindemittelzusammensetzung
die mindestens eine Stärke in einer Menge von 60 bis 90 Gewichtsprozent,
das mindestens eine wasserlösliche Polymer in einer Menge von 2.5 bis 25 Gewichtsprozent und
das mindestens eine Protein in einer Menge von 5 bis 25 Gewichtsprozent, wenn vorhanden, bezogen auf das Trockengewicht der Bindemittelzusammensetzung, aufweist,

11. Wässrige tintenaufnehmende Deckschichtzusammensetzung gemäss Anspruch 10, wobei der gewichtsbezogene Feststoffgehalt der besagten Zusammensetzung, bezogen auf das Gesamtgewicht der wässrigen tintenaufnehmenden Deckschichtzusammensetzung, von 60 bis etwa 70 beträgt,

12. Verwendung einer wässrigen, tintenaufnehmenden Deckschichtzusammensetzung gemäss Anspruch 10 oder 11 zur Herstellung eines Druckpapiers mit einer tintenaufnehmenden Deckschicht, vorzugsweise eines Druckpapiers gemäss Anspruch 1.

13. Verfahren zur Herstellung eines Druckpapiers mit einer tintenaufnehmenden Deckschicht, vorzugsweise eines Druckpapiers gemäss Anspruch 1, wobei das Verfahren die folgenden Schritte beinhaltet:
a. Bilden einer wässrigen, tintenaufnehmenden Deckschichtzusammensetzung aus einer Bindemittelzusammensetzung und einer Pigmentzusammensetzung, wobei die Bindemittelzusammensetzung eine Mischung aus
mindestens einer Stärke,
mindestens einem wasserlöslichen Polymer,
gegebenenfalls mindestens einem Protein,
aufweist,
**dadurch gekennzeichnet, dass** die Bindemittelzusammensetzung
die mindestens eine Stärke in einer Menge von 60 bis 90 Gewichtsprozent,
das mindestens eine wasserlösliche Polymer in einer Menge von 2.5 bis 25 Gewichtsprozent, wenn vorhanden,
das mindestens eine Protein in einer Menge von 5 bis 25 Gewichtsprozent, wenn vorhanden,
bezogen auf das Trockengewicht der Bindemittelzusammensetzung, aufweist,
oder Bereitstellen einer wässrigen, tintenaufnehmenden Deckschichtzusammensetzung gemäss Anspruch 10 oder 11,
b. Auftragen der wässrigen, tintenaufnehmenden Deckschichtzusammensetzung, vorzugsweise in einer Menge von etwa 5 bis 25 g/m², insbesondere bevorzugt in einer Menge von 8 bis 15 g/m², auf ein Basispapier oder ein vorbeschichtetes Papier, insbesondere mittels eines Rakelbeschichters,
c. Trocknen der wässrigen, tintenaufnehmenden Deckschichtzusammensetzung, um ein Druckpapier mit einer tintenaufnehmenden Deckschicht zu bilden, vorzugsweise ein Druckpapier gemäss Anspruch 1.

14. Verfahren zur Herstellung eines Druckpapiers mit einer tintenaufnehmenden Deckschicht gemäss Anspruch 13, wobei während des Schritts der Bildung einer wässrigen tintenaufnehmenden Deckschichtzusammensetzung das mindestens eine Protein als eine wässrige Proteinlösung des mindestens einen Proteins bereitgestellt wird, vorzugsweise mit einem Proteingehalt von etwa 40 bis 50 Gewichtsprozent der wässrigen Proteinlösung.

## Revendications

1. Un papier d'impression comprenant au moins une couche de finition réceptrice d'encre, dans lequel la couche de finition réceptrice d'encre comprend
une composition de pigment,
et une composition de liant,
la composition de liant comprenant un mélange d'au moins un amidon et d'au moins un polymère hydrosoluble qui est soluble dans l'eau à 20 °C dans un quantité de plus de 10mg/l, et éventuellement d'une protéine,
**caractérisé en ce que**
la composition de liant comprend
l'au moins un amidon dans une quantité d'au moins 60 pour cent en poids à 90 pour cent en poids,
l'au moins un polymère hydrosoluble dans une quantité d'au moins 2,5 à 25 pour cent en poids,
l'au moins une protéine dans une quantité d'au moins 5 pour cent en poids à 25 pour cent en poids, lorsqu'elle est présente,
sur la base du poids de la composition de liant.

2. Le papier d'impression selon la revendication 1, dans lequel la composition de liant, ou la composition de liant et la composition de pigment, ou la couche de finition réceptrice d'encre, sont exemptes de polymère synthétique insolubles dans l'eau.

3. Le papier d'impression selon l'une quelconque des revendications précédentes, dans lequel la protéine est une protéine de lactosérum, de la caséine, une protéine de soja, une protéine de blé telle que le gluten et est de préférence une protéine de lactosérum.

4. Le papier d'impression selon l'une quelconque des revendications précédentes, dans lequel la composition de liant comprend
l'au moins une protéine et l'au moins un amidon en une quantité totale d'au moins 75 pour cent en poids, ou de 75 à 97,5 pour cent en poids, de préférence en une quantité d'au moins 85 pour cent en poids, ou de 85 à 90 pour cent en poids, sur la base du poids de la composition de liant, et comprend l'au moins un polymère hydrosoluble dans une quantité de 2,5 à 25 pour cent en poids, de préférence dans une quantité de 2,5 à 5 pour cent en poids, sur la base du poids de la composition de liant.

5. Le papier d'impression selon l'une quelconque des revendications précédentes, dans lequel l'au moins un amidon est de l'amidon non-cationique, et de préférence est de l'amidon non-cationique modifié tel que la dextrine, l'amidon hydroxypropylé ou oxydé.

6. Le papier d'impression selon l'une quelconque des revendications précédentes, dans lequel Il'au moins un polymère hydrosoluble est choisi parmi les polysaccharides tels que les pectines ou les galactomannanes, ou parmi les polymères ou copolymères synthétiques tels que l'alcool polyvinylique, l'alcool éthylène-vinylique ou les mélanges d'alcool polyvinylique et d'alcool éthylène-vinylique.

7. Le papier d'impression selon l'une quelconque des revendications précédentes, dans lequel le rapport pondéral de la composition de liant par rapport à 100 parties en poids de la composition de pigment est compris entre 5 pph et 20 pph de composition de pigment.

8. Le papier d'impression selon l'une quelconque des revendications précédentes, dans lequel l'au moins un polymère hydrosoluble est une polyoléfine hydrosoluble, de préférence un alcool polyvinylique, un alcool éthylène-vinylique ou des mélanges d'alcool polyvinylique et d'alcool éthylène-vinylique, et de préférence dans lequel l'alcool polyvinylique a de préférence un degré d'hydrolyse [mol.-%] de 98 ou plus et/ou a une solubilité d'au moins 20 % à 20 °C dans l'eau.

9. Utilisation d'un papier d'impression selon l'une quelconque des revendications précédentes dans un procédé d'impression offset, un procédé d'impression flexo, un procédé d'impression en héliogravure ou un procédé d'impression numérique.

10. Une composition de couche de finition réceptrice d'encre aqueuse, comprenant une composition de pigment,
et une composition de liant,
dans laquelle la composition de liant comprend
un mélange d'au moins un amidon,
au moins un polymère hydrosoluble,
éventuellement au moins une protéine,
et éventuellement un plastifiant tel que le glycérol ou le sorbitol, **caractérisée en ce que** la composition de liant comprend
l'au moins un amidon dans une quantité d'au moins 60 pour cent en poids à 90 pour cent en poids,
l'au moins un polymère hydrosoluble dans une quantité d'au moins 2,5 à 25 pour cent en poids,
l'au moins une protéine dans une quantité d'au moins 5 pour cent en poids à 25 pour cent en poids, lorsqu'elle est présente,
sur la base du poids de la composition de liant.

11. La composition de couche de finition réceptrice d'encre aqueuse selon la revendication 10, dans laquelle la teneur en solides en poids de ladite composition est de 60 à environ 70, sur la base du poids total de la composition de couche de finition réceptrice d'encre aqueuse.

12. Utilisation d'une composition de couche de finition réceptrice d'encre aqueuse selon la revendication 10 ou 11, pour la fabrication d'un papier d'impression comportant une couche de finition réceptrice d'encre, de préférence un papier d'impression selon la revendication 1.

13. Un procédé de fabrication d'un papier d'impression comportant une couche de finition réceptrice d'encre, de préférence d'un papier d'impression selon la revendication 1, dans lequel le procédé comprend les étapes suivantes :
a. former une composition de finition réceptrice d'encre aqueuse à partir d'une composition de liant et d'une composition de pigment, la composition de liant comprenant un mélange d'au moins un amidon,
d'au moins un polymère hydrosoluble,
éventuellement d'au moins une protéine,
**caractérisé en ce que** la composition de liant comprend
l'au moins un amidon dans une quantité d'au moins 60 pour cent en poids à 90 pour cent en poids,
l'au moins un polymère hydrosoluble dans une quantité d'au moins 2,5 à 25 pour cent en poids,
l'au moins une protéine dans une quantité d'au moins 5 pour cent en poids à 25 pour cent en poids, lorsqu'elle est présente,
sur la base du poids de la composition de liant, ou fournir une composition de couche de finition réceptrice d'encre aqueuse selon la revendication 10 ou 11,
b. appliquer la composition de finition réceptrice d'encre aqueuse, de préférence en une quantité d'environ 5 à 25 g/m², plus préférablement en une quantité de 8 à 15 g/m², sur un papier de base ou un papier pré-enduit, en particulier via une coucheuse à lame,
c. sécher la composition de couche de finition réceptrice d'encre aqueuse de manière à former un papier d'impression ayant une couche de finition réceptrice d'encre, de préférence un papier d'impression selon la revendication 1.

14. Un procédé de fabrication d'un papier d'impression ayant une couche de finition réceptrice d'encre selon la revendication 13, dans lequel pendant l'étape de formation d'une composition de couche de finition réceptrice d'encre aqueuse, l'au moins une protéine est fournie sous forme d'une solution aqueuse de protéines, ayant de préférence une teneur en protéines d'environ 40 à 50 pour cent en poids de la solution aqueuse de protéines.
